# EUROPÄISCHE PATENTANMELDUNG

(11) **EP 1 271 271 A2**
(43) Veröffentlichungstag der Anmeldung: **02.01.2003**
(21) Anmeldenummer: 02013069.6
(22) Anmeldetag: 13.06.2002
(51) Int. Cl.: G05B 19/409

(54) **Multimediale Maschinensteuerung**

(30) Priorität: 19.06.2001 DE 10129188
(71) Anmelder: DM Technologies GmbH & Co., 49549 Ladbergen (DE)
(72) Erfinder: Mueller, Christoph Dipl. Ing., 49549 Ladbergen (DE)
(74) Vertreter: COHAUSZ DAWIDOWICZ HANNIG & PARTNER

(57) **Zusammenfassung**

Die Erfindung betrifft ein Verfahren zur datenbasierten und multimedialen Steuerung und/oder Überwachung von Maschinen und technischen Anlagen bei dem von einer Maschinensteuerung (1) neben der Ein-/Ausgabe und/oder Verarbeitung von Steuerungsdaten (4) zeitgleich Multimediainformationen (5,6), insbesondere Ton- und Bildinformationen, erfaßt und/oder verarbeitet werden. Die Erfindung betrifft weiterhin eine Maschinensteuerung (1) zur Durchführung des Verfahrens.

## Beschreibung

Nahezu grundsätzlich besteht heutzutage bei jeder ferngesteuerten Maschine, bei jedem Automaten oder Telematicsystem auch ein Bedarf an visueller Überwachung. Häufig unterbleibt dies aus Kostengründen. Ebenso werden bei vielen audiovisuellen Überwachungsanlagen zusätzlich auch Funktionen für die Steuerung und Datenkommunikation benötigt.

Preiswerte Internet-Techniken und Multi-Media Hardware, wie sie zum Beispiel für Computersysteme erhältlich sind, ermöglichen prinzipiell eine preiswerte Nutzung von Multi-Media Komponenten. Die Technologie zur Nutzung, beispielsweise von digitalem Video und Audio in technischen Anlagen ist somit prinzipiell vorhanden.

Weiterhin steht durch die zunehmend fortschreitende Vernetzung technischer Anlagen, beispielsweise mit Standard Ethernet-Netzwerken, eine weitestgehend breitbandige Infrastruktur zur Verfügung. Hierdurch kann die volle Integration von Multi-Media Informationen, wie beispielsweise Video- und Audiodaten in technische Anlagen, zum Beispiel Maschinen und Produktionsanlagen ermöglicht werden.

Am Markt sind derzeit verschiedene für sich genommen selbstständige Komponenten erhältlich, beispielsweise (Netzwerk-) Kameras, Bildverarbeitungssysteme, Steuerungssysteme, wie SPS oder Industrie-PCs.

Oftmals erweist es sich als schwierig, die verschiedenen Techniken und Hardware-Komponenten, beispielsweise innerhalb einer Anwendung oder Maschinensteuerung miteinander zu kombinieren bzw. die Techniken in eine Maschinensteuerung zu integrieren. Oftmals werden beispielsweise Bildinformationen gleichzeitig in komprimierter Form für einen Überwachungszweck und in unkomprimierter Form für ein Bildverarbeitungssystem benötigt. Derzeit werden für diese verschiedenen Zwecke auch verschiedene getrennte Systeme benötigt.

Eine weitere Schwierigkeit ist darin zu sehen, auf bandbreitenbeschränkten Netzwerken, wie zum Beispiel drahtlosen Netzwerken oder Wide-Area-Netzen (WAN) die gleichzeitige Übertragung von Multi-Media-Informationen (z. B. Bildinformationen) und Steuersignalen kollisonsminimiert durchzuführen. Dieses Problem wird auch zukünftig bei breitbandigen Mobilfunksystemen bestehen, da deren Bandbreite weiterhin nicht an die Bandbreiten konventioneller lokaler Netzwerke heranreichen wird.

Aufgabe der Erfindung ist es, ein Verfahren und eine Maschinensteuerung, insbesondere zur Durchführung des Verfahrens zur Verfügung zu stellen, mittels denen die genannten Techniken kombiniert und Multi Media Informationen in Maschinensteuerungen integriert werden. Eine weitere Aufgabe der Erfindung besteht darin, eine bandbreitenlimitierte Übertragung von Multi-Media-Informationen und Steuerungsdaten, insbesondere über ein Netzwerk zu ermöglichen.

Diese Aufgaben werden gelöst, durch eine Maschinensteuerung zur Durchführung eines Verfahrens, bei dem neben der Ein-/ Ausgabe und/oder Verarbeitung von Steuerungsdaten zeitgleich Multi-Media-Informationen, insbesondere Ton- und Bildinformationen, erfasst und/oder verarbeitet werden.

Die erfindungsgemäße multimediale Maschinensteuerung löst die bekannten Probleme durch eine Vereinigung traditioneller Maschinensteuerungen mit der Multimedialen Technik, insbesondere in einem einzigen Gerät, welches eine einheitliche Bearbeitung von Steuerungsinformationen und Multi-Media-Informationen ermöglicht. Ein solches in sich einheitliches Gerät kann Mittel zur Eingabe, Ausgabe, Erfassung und Verarbeitung von Steuerungsdaten und Multi- Media Informationen umfassen. Hierbei kann insbesondere eine zeitgleiche Bearbeitung von Steuerungsdaten und Multi-Media-Informationen möglich sein.

Die multimediale Maschinensteuerung kann zum Beispiel PC-basierte Steuerungstechniken mit Mullti-Media-Funktionen zu modernen, kommunikativen und insbesondere leicht individuell anpassbaren Anwendungen kombinieren.

Eine auf der erfindungsgemäßen Maschinensteuerung ablaufenden Software ermöglicht die Maschinensteuerung, Bedienung, insbesondere Fernbedienung, einen Fernservice und beispielsweise eine intelligente Integration von Multi-Media Informationen, wie zum Beispiel Bild- und Audiodaten.

Die Hardware kann aus PC-Komponenten, zum Beispiel in einem standardisierten Miniaturformat, eingebaut in ein wasser-, staub-, und erschütterungsresistentes Gehäuse, auch ohne rotierende Festplatten bestehen. Alternativ können übliche Standard-PCs verwendet werden.

Die Software, die bevorzugt zur Durchführung der erfindungsgemäßen Verfahrensschritte eingesetzt wird, kann alle Grundkomponenten für die Erstellung individueller multimediafähiger Anwendungen enthalten. Dies umfasst beispielsweise die Kommunikation mit Netzwerken und Maschinen, die (Fern-) Bedienung, sowie das Senden und die Speicherung von Einzelbildern und Videosequenzen. Hinzu kann ein Webserver kommen für die Kommunikation über die üblichen Internettechniken.

Die Steuerungsdaten und Multi-Media Informationen können somit. insbesondere über ein Datennetzwerk, zum Beispiel einem Bediener und/oder anderen Datenverarbeitungssystemen zugänglich gemacht werden.

Durch eine modulare Strukturierung der erfindungsgemäßen multimedialen Maschinensteuerung können ergänzend auch individuelle Anwendungen als eigenständige Programme, beispielsweise einfach über eine offene Programmierschnittstelle hinzugefügt werden. Dies ermöglicht es dem Kunden, eigenes Know-how völlig flexibel in das System einbinden zu können, ohne dies gegenüber Beratern oder Lieferanten offenbaren zu müssen.

Die erfindungsgemäße Multimediale Maschinensteuerung kann betriebssystemunabhängig ausgeführt werden, wobei eine Realisierung beispielsweise auf Java oder C++ beruhen kann. Sämtliche Kommunikation, sowohl zwischen einem Bediener bzw. dessen Computer als auch mit den zuständigen Anlagen oder Maschinen kann über Internettechniken, sowie über Standardnetzwerke erfolgen. Dementsprechend benötigt ein Bediener lediglich einen beliebigen Web-Browser, der zum Beispiel über ein Netzwerk mit der Maschine bzw. der Maschinensteuerung verbunden ist.

Um eine Kommunikation mit einem Benutzer bzw. mit einer zu steuernden Maschine und gleichzeitig auch eine multimediale Überwachung zu ermöglichen, umfasst eine erfindungsgemäße multimediale Maschinensteuerung beispielsweise Netzwerkanschlüsse, direkte Kameraanschlüsse zum Beispiel in digitaler oder analoger Form, sowie über Netzwerkanbindung, Sensor/ Aktor-Schnittstellen und/oder Feldbusanschlüsse.

So können beispielsweise mittels der Sensor/ Aktor-Schnittstellen und/oder den Feldbusanschlüssen entsprechende Steuerdaten zu einer Maschine geschrieben bzw. von dieser gelesen werden, wobei gleichzeitig die Steuerungsdaten, seien es nun von der Maschine eingelesene oder an die Maschine herausgeschriebene Steuerungsdaten und eventuell erfasste Multi-Media Informationen miteinander verknüpft werden können. Insbesondere kann so auf einfache Weise eine Korrelation zwischen diesen unterschiedlichen Daten erzeugt werden. Es können somit, mit der erfindungsgemäßen und als Einheit betrachteten multimedialen Maschinensteuerung Multi-Media-Informationen zusammen mit den Steuerungsdaten verarbeitet werden.

Beispielsweise kann eine erfindungsgemäße Maschinensteuerung in einer bevorzugten Variante einen Speicher für rohe und/oder komprimierte/ verarbeitete Multi-Media Informationen umfassen. In diesem Speicher bei dem es sich zum Beispiel um einen Bildspeicher handeln kann, werden die digitalisierten Videoinformationen einer Überwachungskamera abgelegt, so dass zum Beispiel anhand dieser Rohbilddaten eine weitere Bearbeitung stattfinden kann. Die Rohbilddaten können für eine reine visuelle Überwachungsfunktion komprimiert und abgespeichert werden oder aber es besteht auch die Möglichkeit auf diese Rohbilddaten eine Bildverarbeitung aufzusetzen, um aus den Rohbilddaten selbst Steuerungsdaten abzuleiten. Diese Bildbearbeitung kann dabei in Abhängigkeit anderer Steuerungsdaten erfolgen. Selbstverständlich können Audiodaten auf die gleiche Weise bearbeitet werden.

Die aus einer Bildverarbeitung abgeleiteten Steuerungsdaten oder auch andere von der Maschinensteuerung erfasste oder berechnete Steuerungsdaten, können mittels der erfindungsgemäßen Maschinensteuerung mit den erfassten Multi-Media Informationen verknüpft werden. Eine solche Verknüpfung kann zum Beispiel darin bestehen, dass die Steuerungsdaten in die Multi-Media Daten eingespiegelt werden durch Übrlagerung des Videobildes mit entsprechenden technischen Informationen in Textform oder als grafische Visualisierung. Somit kann ein Bediener nach Erhalt dieser Informationen feststellen, wie sich eine Änderung von Steuerungsparametern, zum Beispiel auf die Funktion einer Maschine auswirkt, da diese Auswirkung z.B. in einer visuellen Multi-Media-Information dargestellt werden kann.

Die beispielsweise in visuelle Multi-Media-Information eingespiegelten Steuerungsdaten können ihrerseits mit der visuellen Multi-Media Information zusammen in einem Speicher abgelegt werden und ggf. nach Komprimierung in einem entsprechenden Multi-Media Speicher für komprimierte Daten abgelegt und weiter verwendet werden.

Eine Möglichkeit der Weiterverarbeitung besteht zum Beispiel auch darin, die erfassten Multi-Media Informationen, ggf. mit verknüpften Steuerungsdaten, lokal zu speichern. Die Speicherung kann zum einem innerhalb der erfindungsgemäßen Maschinensteuerung erfolgen, als auch in ausgelagerten Peripheriegeräten. So besteht die Möglichkeit die Multi-Media Informationen ggf. mit Steuerungsdaten und insbesondere in Abhängigkeit von Steuerungsdaten mittels einer in der Maschinensteuerung vorgesehenen Verteileinheit auf unterschiedlichste Ein- Ausgabekanäle zu verteilen.

Diese Verteilung kann erfolgen in Abhängigkeit von Benutzeranforderungen, der aktuellen Betriebssituation und/oder Zuständen und Ereignissen in der Maschinensteuerung und beispielsweise so erfolgen, dass von der Verteileinheit Einzelbilder abgelegt werden, Bild- oder Tonsequenzen gespeichert werden, die Multi-Media Informationen beispielsweise in einem Ringspeicher abgelegt werden, der periodisch überschieben wird, so dass diese Daten für Revisionszwecke zur Verfügung stehen.

Sämtliche Daten, sowohl die Steuerungsdaten als auch die Multi-Media Daten sowie hieraus ggf. abgeleitete Informationen, wie die überlagerten Steuerungs- und Multi-Media-Informationen können insbesondere mittels einer Netzwerkanbindung an die Benutzer bzw. die von ihnen bedienten Computer übertragen werden. Insbesondere bei einer bandbreitenlimitierten Netzwerkanbindung, wird bevorzugterweise innerhalb der erfindungsgemäßen Maschinensteuerung eine Steuereinheit vorgesehen, mittels der anhand vorgegebener und/oder einstellbarer Prioritäten die Multi-Media-Informationen und/oder Steuerungsdaten gleichzeitig übertragen werden. Durch diese Prioritätssteuerung können Netzwerkprobleme bei der gleichzeitigen Übertragung von Multi-Media und Steuerungsinformationen vermieden werden. Beispielsweise kann den Steuerungsdaten eine höhere Priorität zugewiesen werden, wie den Multi-Media-Informationen, so dass diese bevorzugt durch das Netzwerk übertragen werden, wenn eine Übertragung beider Informationstypen gewünscht ist. Die erfindungsgemäße multimediale Maschinensteuerung wird so dann aufgrund ihrer Prioritätssteuerung dafür Sorge tragen, dass eine kollisionsminimierte Übertragung dieser Datentypen über das Netzwerk erfolgt.

Die ggf. vorgesehene Komprimierung der multimedialen Daten, also zum Beispiel der Audio- oder der Video-Informationen kann aufgrund der Flexibilität der erfindungsgemäßen Maschinensteuerung mit einem freiwählbaren Komprimierungsverfahren erfolgen, wobei auch die Bild- und Toninformationen zusammengeführt werden können. Das Komprimierungsverfahren für die Audio- und die Videodaten kann unterschiedlich sein, es kann jedoch auch ein gemeinsames Komprimierungsverfahren eingesetzt werden oder es werden verschiedene Komprimierungsverfahren auf dieselben Rohdaten angewandt, um verschiedene Ergebnisse zu erhalten..

Durch die Programmierbarkeit der erfindungsgemäßen Maschinensteuerung, die im wesentlichen die Steuerungsfunktionen und die Auswertung und Verarbeitung der Multi-Media-Informationen betrifft, ergibt sich eine erhebliche Kosteneinsparung, da die erfindungsgemäße Maschinensteuerung immer wieder an individuelle Anwendungsbedürfnisse angepasst werden kann. Bei Integration eines Webservers in die Maschinensteuerung besteht keine Notwendigkeit mehr eine Bedienerschnittstelle zu programmieren, da die Maschinensteuerung als Web-site identisch für einen Bediener vor Ort, für eine Fernbedienung oder einen Fernservice dargestellt werden kann. Selbst eine Sprachumschaltung ist somit im laufenden Betrieb möglich.

Wenn die Bedienung der Maschinensteuerung webbasiert ist, besteht die Möglichkeit die gesteuerten Anlagen auch ohne ein Bedienterminal auszuliefern, da ein Bediener den direkten Zugriff auf eine Maschine über die Maschinensteuerung beispielsweise mittels eines mobilen drahtlosen Web-Pad, allgemein gesprochen mit einer mobilen Bedieneinheit vor Ort herstellen kann. Eine solche mobile Bedieneinheit kann kostensparend mit allen Maschinen eingesetzt werden, die an die multimediale Maschinensteuerung angeschlossen ist. Dementsprechend würden Kosten für die lokalen Bedienstationen an den einzelnen Anlagen und Maschinen entfallen.

Die intelligente Videointegration in die Steuerungsdaten durch die erfindungsgemäße Maschinensteuerung ermöglicht eine Realisierung von Einzelbildfunktionen oder Bildsequenzen für die direkte Übertragung an einen angeschlossenen Benutzer und zur Abspeicherung, um zum Beispiel in Fehlersituationen einen Rückgriff auf diese multimedialen Daten zu erhalten. Dabei kann beispielsweise eine Fehlersituation selbst ein auslösendes Moment darstellen, um die Abspeicherung einer Sequenz zu inszenieren. Zum Beispiel kann mittels dieser Maßnahmen ein sogenannter "Videofahrtenschreiber" realisiert werden, so dass ein Bediener nachsehen kann, was sich vor und während einer Fehlermeldung an der betreffenden Anlage abgespielt hat, da diese Bildinformationen ständig abrufbar sind. Aufgrund der Tatsache, dass die Informationen zwischengespeichert werden können, wird auch die Notwendigkeit von Kontrollgängen in der Produktion reduziert.

Die Verknüpfung der Multi-Media-Informationen und Steuerungsdaten in einem einzigen erfindungsgemäßen Maschinensteuerungssystem ermöglicht auch weiterhin die Abspeicherung von Einzelbildern oder ganzen Videosequenzen, um einer Qualitätssicherung genüge zu tun. So kann beispielsweise ein Foto oder eine Videosequenz von jedem Endprodukt das von einer Maschine gefertigt wird, abgespeichert werden. Sollte es zu Beanstandungen kommen, so kann auf diese Informationen zurückgegriffen werden, wobei neben den reinen, zum Beispiel optischen Videoinformationen auch Informationen über die Steuerungsparametern vorliegen, so dass eine Fehlersuche erheblich erleichtert ist.

Die Videofunktionen der erfindungsgemäßen Maschinensteuerung können auch für eine Fernserviceunterstützung zum Beispiel bei mechanischen Problemen genutzt werden. So ist es denkbar, dass nach Anschluss einer mobilen Kamera, beispielsweise ein Servicetechniker bei komplizierten Montagen einen örtlich entfernten Spezialisten hinzuzieht. Die Verbindung zu diesem Spezialisten kann dann beispielsweise über Modem oder Internet erfolgen.

Ein bevorzugtes Ausführungsbeispiel der erfindungsgemäßen Maschinensteuerung zur Durchführung des erfindungsgemäßen Verfahrens ist in der nachfolgenden Figur dargestellt.

Die erfindungsgemäße Maschinensteuerung 1 beinhaltet sämtliche Mittel in einem einzigen Gerät, die zur Ein-/Ausgabe, Erfassung und Verarbeitung sowohl von Steuerungsdaten als auch multimedialen Informationen nötig sind. Kernstück der erfindungsgemäßen Maschinensteuerung ist eine Steuerungseinheit 2 mittels der sowohl eine Kommunikation, ggf. unter Zwischenschaltung einer Prioritätssteuerung 3 über ein Netzwerk 16 zu Bedienern oder anderen Rechnern möglich ist.

Mittels der Steuerungseinheit 2 kann beispielsweise über Datenein- und Ausgänge 4, zum Beispiel für Sensoren und Aktoren oder einen Feldbus eine Kommunikation mit einer zu steuernden nicht dargestellten Anlage erfolgen. So können beispielsweise entsprechende Steuerungsdaten an die Maschine geschrieben werden oder aber es können Steuerungsinformationen von einer Maschine ausgelesen und dann der weiteren Steuerung zugrunde gelegt werden.

Neben der Ein- und Ausgabe von Steuerungsdaten können ebenfalls gleichzeitig Multi-Media-Informationen beispielsweise über Erfassungseinheiten für Audiodaten 5 und Videodaten 6 der Maschinensteuerung zur Verfügung gestellt werden. Diese Daten können mittels nachgeschalteter Digitalisierungseinheiten 7 digitalisiert werden, sofern sie ursprünglich in analoger Form vorliegen.

Im dargestellten Ausführungsbeispiel, werden die Bilddaten von Videokameras nach einer Digitalisierung in einen Rohbildspeicher 8 abgelegt, wo diese Daten für eine weitere Verarbeitung vorgehalten werden. Die weitere Verarbeitung kann zum Beispiel darin bestehen, dass mit einer nachgeschalteten Komprimierungseinheit 9 die Rohbilddaten eventuell zusammen mit Audiodaten komprimiert und in einem hierfür vorgesehenen Multi-Media Speicher 10 abgelegt werden.

Die Multi-Media Daten können so dann mit einer Verteilereinheit 11 entweder in der komprimierten Form aus dem Multi-Media-Speicher 10 oder direkt nach der Komprimierung auf weitere nicht dargestellte Peripheriegeräte 12 verteilt werden. Bei diesen Peripheriegeräten kann es sich zum Beispiel um lokale Speicher für Einzelbilder, Bild-/Tonsequenzen oder um Ringspeicher handeln, in denen die Multi-Media-Informationen periodisch wieder überschrieben werden.

Die Steuerung der Verteilung der Multi-Media-Informationen auf verschiedene Peripheriegeräte 12 kann hierbei anhand von Benutzeranforderungen oder Steuerungsdaten, die von der Steuerungseinheit 2 über eine entsprechende Verbindung 13 an die Verteilungseinheit 12 weitergeleitet werden, beeinflusst werden.

Im Ausführungsbeispiel dargestellt ist eine Möglichkeit, die Multi-Media-Informationen mit Steuerungsdaten zu verknüpfen. Diese Verknüpfung kann zum Beispiel derart sein, dass die einzublendenden Daten von der Steuerungseinheit 2 zur Verfügung gestellt werden und mittels einer Einheit zur Dateneinspiegelung 14 in den Rohbildspeicher 8 eingeschrieben werden. Diese Informationen, die so dann aus einer Überlagerung von Steuerungsdaten und Multi-Media-Informationen im Rohbildspeicher 8 vorliegen, können dann, wie erwähnt, zum Beispiel mittels Komprimierung weiterverarbeitet werden.

Weiterhin ist dargestellt, dass aus den Multi-Media-Informationen, hier im konkreten Fall aus den visuellen Daten, mittels einer Bildbearbeitung 15 Steuerungsdaten abgeleitet werden. Diese Steuerungsdaten entsprechen den Ergebnissen der Bildverarbeitung. Diese Ergebnisse der Bildverarbeitung können der Steuerungseinheit 2 zur Verfügung gestellt werden und beispielsweise die Daten darstellen, die in die Multimedialen Daten mittels der Einheit 14 eingespiegelt werden. Die Bildverarbeitung selbst, kann ebenfalls anhand von Steuerungsdaten, die die Steuereinheit 2 zur Verfügung stellt, beeinflusst werden.

Die Komprimierung, die in der Komprimierungseinheit 9 stattfindet, kann für Audiodaten und Videodaten mittels verschiedener Komprimierungsalgorithmen vollzogen werden. Es besteht genauso die Möglichkeit für die beiden verschiedenen Daten einen gemeinsamen Algorithmus zu verwenden und hierbei die beiden verschiedenen Informationstypen miteinander zu verknüpfen. Die Steuerung der Komprimierung kann hier ebenfalls durch die Steuereinheit 2 erfolgen.

Die von der Steuerungseinheit 2 zur Verfügung gestellten Steuerungsdaten sowie die ebenfalls zur Verfügung stehenden multimedialen Daten, die zuvor einer eventuellen Verarbeitung unterliegen, können mittels einer Netzwerkanbindung 16 zu einem Benutzer übertragen werden. Dieser Benutzer wird sich üblicherweise eines Rechnersystems bedienen. Die zu übertragenden Steuerungsdaten und multimedialen Daten werden aus der Steuerungseinheit und der Verteilungseinheit 11 im vorliegenden Fall einer Prioritätssteuerung 3 zugeführt, um aufgrund einer Bandbreitenlimitierung der Netzwerkverbindung 16 eine kollisionsminimierte Übertragung dieser in der Bandbreite höchst unterschiedlichen Datentypen zu ermöglichen. Hierbei kann den Steuerungsdaten aufgrund ihrer höheren Relevanz und Wichtigkeit eine erhöhte Priorität zugebilligt werden, so dass mittels der Prioritätssteuerung 3 bei einer entsprechenden Benutzeranfrage bevorzugt die Steuerungsdaten übertragen werden. Die Prioritätssteuerung 3 wird dementsprechend die Belastung des Netzwerkes 16 dementsprechend steuern, dass eine optimale und kollisionsminimierte Auslastung stattfindet.

Ebenfalls dargestellt im Ausführungsbeispiel ist, dass die Steuerungseinheit 2 eine Möglichkeit zur Verfügung stellt, mittels Steuerungsverbindungen 17 auch Einfluss zu nehmen sowohl auf die Audio- als auch visuellen Erfassungssysteme 5 und 6. So kann beispielsweise mittels dieser Steuerung beeinflusst werden, in welcher Richtung oder mit welchem Zoomfaktor eine Kamera Bilder aufnimmt, es kann ein Bildausschnittsveränderung oder ähnliche Einstellungen an der Kamera vorgenommen werden. Genauso können Mikrofone und andere Multimediageräte gesteuert werden.

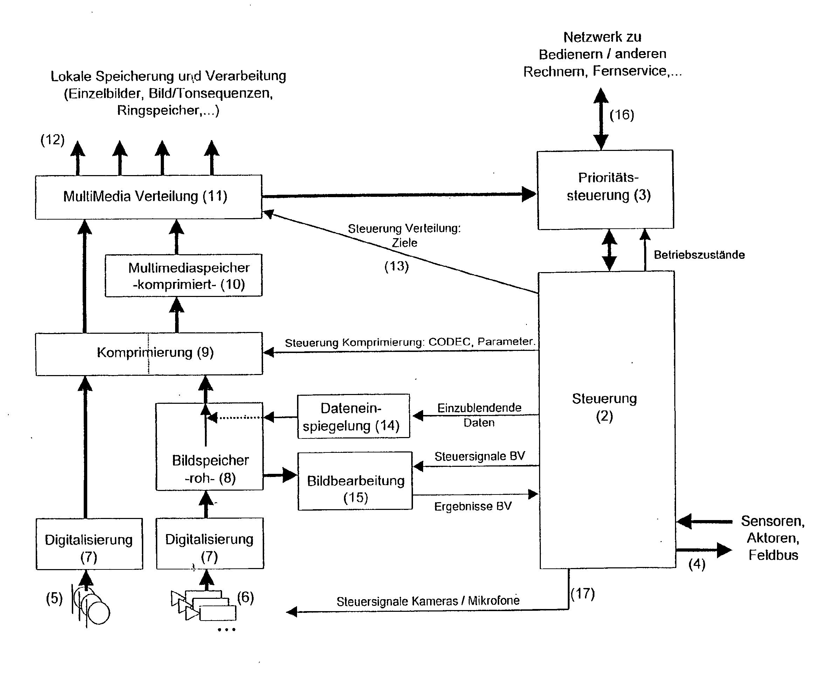

## Patentansprüche

1. Verfahren zur datenbasierten und multimedialen Steuerung und/oder Überwachung von Maschinen und technischen Anlagen **dadurch gekennzeichnet, daß** von einer Maschinensteuerung (1) neben der Ein-/Ausgabe und/oder Verarbeitung von Steuerungsdaten (4) zeitgleich Multimediainformationen (5,6), insbesondere Ton- und Bildinformationen, erfaßt und/oder verarbeitet werden.

2. Verfahren nach Anspruch 1, **dadurch gekennzeichnet, daß** die Steuerungsdaten (4) und Multimediainformationen (5,6), insbesondere über ein Daten-Netzwerk (16) einem Bediener und/oder Datenverarbeitungssystem zugänglich gemacht werden.

3. Verfahren nach Anspruch 2, **dadurch gekennzeichnet, daß** die Übertragung der Steuerungsdaten (4) und Multimediainformationen (5,6) über ein Netzwerk (16) anhand einer Prioritätssteuerung (3) erfolgt, aufgrund derer die Daten/Informationen in der Reihenfolge der ihnen zugewiesenen Prioritäten übertragen werden.

4. Verfahren nach einem der vorherigen Ansprüche, **dadurch gekennzeichnet, daß** die erfaßten Multimediainformationen (5,6) lokal gespeichert (8,10,12) und/oder verarbeitet (9,14,15) werden.

5. Verfahren nach Anspruch 4, **dadurch gekennzeichnet, daß** die Multimediainformationen (5,6), insbesondere nach Speicherung der Rohinformationen (8), komprimiert (9) werden.

6. Verfahren nach Anspruch 5, **dadurch gekennzeichnet, daß** die Komprimierung (9) unter Auswertung und/oder Einbeziehung von Steuerungsdaten erfolgt.

7. Verfahren nach einem der vorherigen Ansprüche, **dadurch gekennzeichnet, daß** aus den Multimediainformationen (5,6) , insbesondere durch Datenverarbeitung (15) Steuerdaten abgeleitet werden.

8. Verfahren nach einem der vorherigen Ansprüche, **dadurch gekennzeichnet, daß** Steuerungsdaten (4) und Multimediainformationen (5,6) miteinander verknüpft (14) werden, insbesondere korreliert werden.

9. Verfahren nach Anspruch 8, **dadurch gekennzeichnet, daß** Steuerdaten (4) in die Multimediadaten (5,6) eingespiegelt (14) werden.

10. Verfahren nach einem der vorherigen Ansprüche, **dadurch gekennzeichnet, daß** Multimediainformationen (5,6), insbesondere unter Einbeziehung und Auswertung von Steuerungsdaten (4) auf Peripheriegeräte verteilt (12) werden.

11. Maschinensteuerung (1) zur Durchführung eines Verfahrens nach einem der vorherigen Ansprüche.

12. Maschinensteuerung nach Anspruch 11, **dadurch gekennzeichnet, daß** sie in einem Gerät Mittel zur Eingabe, Ausgabe, Erfassung und Verarbeitung von Steuerungsdaten (4) und Multimediainformationen (5,6) umfasst.

13. Maschinensteuerung nach Anspruch 12, **dadurch gekennzeichnet, daß** sie einen Speicher (8) für rohe und/oder komprimierte/verarbeitete (10) Multimediainformationen (5,6) umfasst.

14. Maschinensteuerung nach einem der vorherigen Ansprüche, **dadurch gekennzeichnet, daß** sie eine Verteileinheit (11) umfasst, mittels der Multimediainformationen (5,6) und/oder Steuerdaten (4), insbesondere in Abhängigkeit von Benutzeranforderungen (13) und/oder Zuständen und Ereignissen in der Maschinensteuerung, auf verschiedene Ein-/Ausgabekanäle verteilbar sind.

15. Maschinensteuerung nach einem der vorherigen Ansprüche, **dadurch gekennzeichnet, daß** sie eine Steuereinheit (3) umfasst mittels der anhand vorgegebener und/oder einstellbarer Prioritäten Multimediainformationen (5,6) und/oder Steuerungsdaten (4) gleichzeitig, insbesondere über ein Netzwerk (16), zu/von Benutzern und/oder Datenverarbeitungsgeräten übertragbar sind.
